(19) Europäisches Patentamt
European Patent Office
Office européen des brevets

(11) Numéro de publication: **0 156 716 B1**

(12) # FASCICULE DE BREVET EUROPEEN

(45) Date de publication du fascicule du brevet: **11.05.88**

(51) Int. Cl.⁴: **F 24 C 7/08**, G 05 D 23/19, H 05 B 6/68

(21) Numéro de dépôt: **85400456.1**

(22) Date de dépôt: **08.03.85**

(54) **Appareil de cuisson à commande interactive.**

(30) Priorité: **13.03.84 FR 8403836**

(43) Date de publication de la demande: **02.10.85 Bulletin 85/40**

(45) Mention de la délivrance du brevet: **11.05.88 Bulletin 88/19**

(84) Etats contractants désignés: **BE DE FR GB IT NL**

(56) Documents cités:
**EP - A - 0 050 240**
**DE - A - 2 733 362**
**DE - A - 3 010 715**
**DE - A - 3 129 802**

**PATENTS ABSTRACTS OF JAPAN, vol. 7, no. 5 (M-184), 11 janvier 1983, page 66 M 184**

(73) Titulaire: **COMPAGNIE EUROPEENNE POUR L'EQUIPEMENT MENAGER "CEPEM", 74, rue du Surmelin, F-75020 Paris (FR)**

(72) Inventeur: **Maitenaz, Paul, THOMSON-CSF SCPI 173, bld Haussmann, F-75379 Paris Cedex 08 (FR)**

(74) Mandataire: **Phan, Chi Quy et al, THOMSON-CSF SCPI 19, avenue de Messine, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un appareil de cuisson à commande interactive. De tels appareils sont, par exemple, connu par DE-A-3129802.

De manière générale, les appareils de cuisson à commande interactive sont d'une utilisation simplifiée, car il n'est pas nécessaire de se reporter à une notice écrite souvent fastidieuse à consulter et qui finalement n'incite pas l'utilisateur à se servir de toutes les fonctions permises par ces appareils.

Les appareils de cuisson à commande interactive connus sont munis d'un microprocesseur interactif couplé à des commutateurs d'entrée à fonctionnement manuel situés sur un bandeau de commande. Ces commutateurs, mis à la disposition d'un utilisateur, lui permettent de répondre aux questions posées par le microprocesseur qui comporte en mémoire un grand nombre de recettes.

Mais ces appareils présentent un inconvénient majeur qui est la mise en mémoire préalable de ces recettes, et l'utilisateur répond aux questions inscrites sur l'affichage alpha-numérique au moyen de plusieurs interrupteurs.

Ces appareils sont donc complexes dans leur réalisation car ils nécessitent la présence de mémoire et d'un écran de visualisation, et complexes dans leur utilisation car ils obligent l'utilisateur à manœuvrer un nombre relativement élevé de boutons pour répondre aux questions posées.

Chaque utilisation dans un mode donné de l'appareil réalise une séquence de fonctionnement. Chaque séquence peut comporter plusieurs phases.

Pour une utilisation en cuisson, il peut exister par exemple une phase de préchauffage, puis une phase de cuisson proprement dite. Il est donc nécessaire de programmer certains paramètres ou informations indispensables au bon déroulement de la séquence. Dans l'exemple considéré, il serait nécessaire de programmer la durée de préchauffage, la température, la durée de la cuisson et sa température, ou bien encore une durée globale à température donnée.

L'utilisateur peut également souhaiter programmer une heure précise de début ou de fin de cuisson, ou bien un démarrage immédiat dès la fin de programmation.

Si l'un des paramètres est omis, la séquence ne peut se dérouler correctement.

Cependant, toutes les séquences ne nécessitent pas la programmation des mêmes paramètres, et il faut donc que l'utilisateur ne puisse programmer que les paramètres nécessaires à la séquence qu'il a choisie.

La présente invention se présente donc comme un guide d'utilisation qui permet à l'utilisateur de suivre de façon claire et logique le déroulement de la programmation, tout en lui laissant le choix du mode de cuisson, manuel ou automatique, le choix du début et de la durée de la cuisson.

La présente invention a donc pour objet un appareil de cuisson à commande interactive comportant un microprocesseur interactif, des moyens de commande sous la forme d'un générateur d'impulsions et d'un bouton-poussoir, mis à la disposition d'un utilisateur pour programmer une séquence de fonctionnement, et des dispositifs d'affichage comportant un afficheur numérique, caractérisé en ce que les dispositifs d'affichage comprennent en outre un afficheur de séquences indiquant la nature de la séquence de fonctionnement, et des voyants associés à l'afficheur numérique indiquant chacun la nature des informations inscrites sur ledit afficheur, et en ce que lors d'une programmation apparaissent exclusivement des informations nécessaires au déroulement de la séquence considérée.

Ainsi, lors de la programmation d'une séquence, l'utilisateur est guidé puisque les informations qui apparaissent concernent uniquement les paramètres nécessaires au bon déroulement de ladite séquence.

Il ne risque donc pas d'oublier de programmer l'un ou l'autre des paramètres ou d'en programmer des inutiles. De plus, il lui suffit simplement de manipuler deux organes de commande, ce qui limite également les risques d'erreur lors de la programmation.

De préférence, l'afficheur de séquence est constitué de voyants, un pour chaque séquence, associés chacun à un signe ou à un repère distinctif permettant de reconnaître la séquence choisie.

Dans une variante, on prévoit que l'afficheur de séquences, indique en clair la séquence chosie, et est réalisé par exemple à l'aide de pavés à caractères alphanumériques.

De préférence, les moyens de commande comportent chacun un voyant associé qui indique à l'utilisateur qu'il peut utiliser le moyen de commande correspondant.

Avantageusement, on prévoit en outre deux voyants permettant de connaître le mode de fonctionnement manuel ou automatique, et le bouton-poussoir permet, à lui seul, le contrôle de l'état de fonctionnement de l'appareil.

Selon une autre caractéristique de l'invention, les moyens de commande et les divers dispositifs de visualisation et d'affichage sont regroupés sur un bandeau. De préférence, le bandeau est situé sur la face frontale de l'appareil.

De préférence, le bandeau est au sommet de la dite face frontale.

Il est décrit ci-après, à titre d'exemple et en référence aux dessins annexés, un appareil de cuisson à commande interactive selon l'invention.

La figure 1 représente le bandeau d'un tel appareil de cuisson.

La figure 2 représente un schéma électrique d'un tel appareil de cuisson.

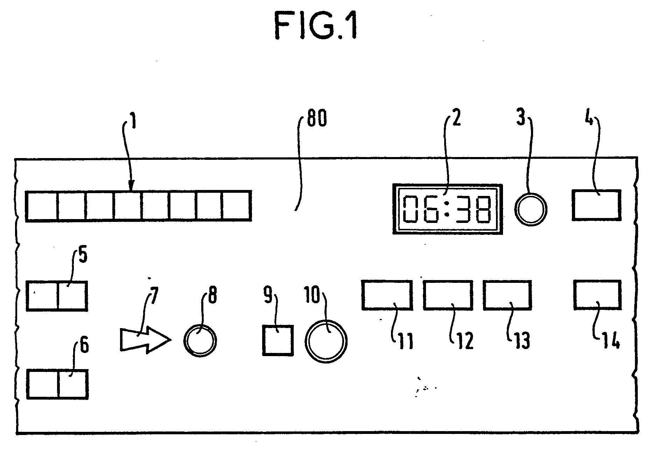

Dans la figure 1, il est représenté un bandeau 80 d'un appareil de cuisson, et ce bandeau 80 comporte, un afficheur de séquence 1 muni de moyens de visualisation qui peuvent être, par exemple, des pavés à raies lumineuses ou des voyants, un afficheur numérique 2 à quatre chiffres et des voyants lumineux 11, 12, 13 associés précisant la nature de l'affichage lu sur l'afficheur

2, un bouton-poussoir 3 de mise à l'heure, un voyant de thermostat 4, un voyant lumineux 5 de fonctionnement manuel, un voyant lunineux 6 de fonctionnement automatique, un bouton poussoir 8 de programmation et de lecture et une flèche lumineuse 7 associée qui indique à l'utilisateur qu'il peut appuyer sur le bouton-poussoir 8, un générateur d'impulsions 10 et un voyant lumineux 9 associé qui indique à l'utilisateur qu'il peut manœuvrer le générateur d'impulsions, et enfin, un voyant lumineux 14 de verrouillage de la porte dans le cas d'un appareil de cuisson pyrolytique. Le voyant 11 est le voyant de programmation de la température, le voyant 12 est le voyant de programmtion de la durée de la cuisson et le voyant 13 est le voyant de programmation de l'heure de fin de cuisson.

Dans une variante de réalisation, l'afficheur de séquences 1 est réalisé à l'aide de pavés à caractères alphanumériques, ce qui permet d'indiquer en clair la séquence de fonctionnement.

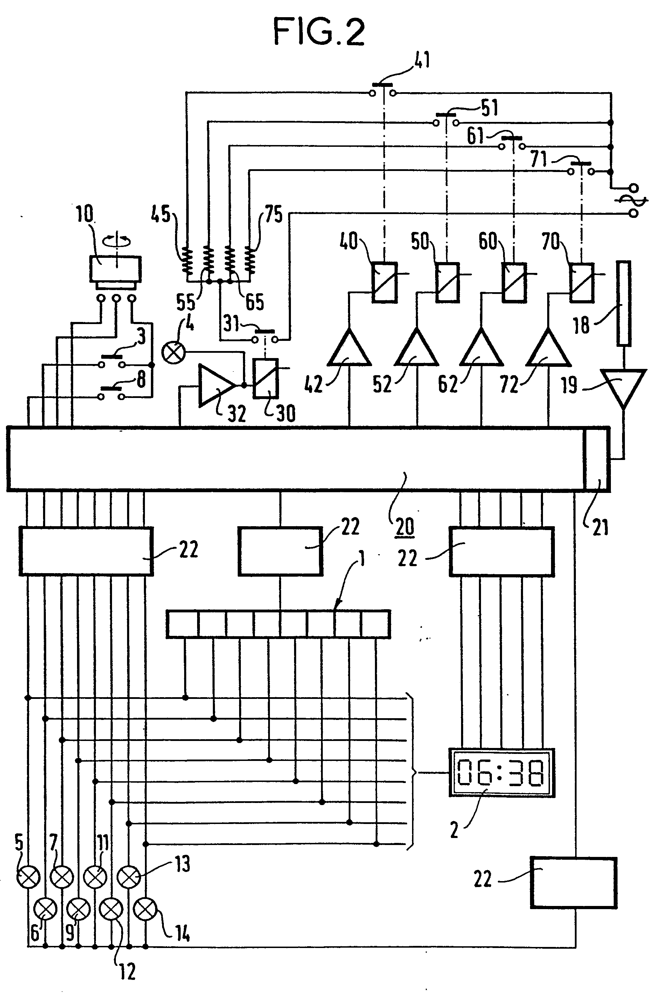

Dans la figure 2, il est représenté tous les éléments du bandeau décrits à la figure 1, c'est-à-dire, l'afficheur de séquences 1, l'afficheur numérique 2, les voyants lumineux 4, 5, 6, 7, 9, 11, 12, 13, 14, les boutons 3, 8 et le générateur d'impulsions 10, puis tous les éléments placés à l'intérieur de l'appareil c'est-à-dire, un microprocesseur interactif 20 possédant une entrée analogique 21 qui reçoit un signal d'un amplificateur 19 relié à une sonde de température 18, des interfaces 22 permettant d'amplifier les signaux sortant du microprocesseur, des résistances de chauffage 45, 55, 65, 75, un relais unipolaire de thermostat muni d'un contact 31 et d'une bobine 30 reliée au microprocesseur 20 par un amplificateur 32, chaque résistance 45, 55, 65, 75 étant reliée au réseau d'alimentation par l'intermédiaire d'un contact 41, 51, 61, 71 d'un relais unipolaire dont la bobine 40, 50, 60 70 est reliée au microprocesseur 20 par un amplificateur 42, 52, 62, 72. Bien entendu l'appareil peut comporter un nombre quelconque de résistances et un nombre équivalent de relais et d'amplificateurs.

Une opération de programmation de l'appareil de cuisson par un utilisateur de passe donc de la manière suivante:

– de manière connue, au cours de la première utilisation et éventuellement après une coupure de courant, l'utilisateur manipule le bouton-poussoir 3 de mise à l'heure sur l'afficheur numérique 2.

D'une manière générale, cet afficheur numérique est associé à une holroge et, au cours de la programmation, l'heure disparait lorsque l'on appuie sur le bouton-poussoir 8 rendant l'affichage disponible. Elle réapparait lorsque l'on relâche le bouton-poussoir 8.

Cette manipulation terminée, la programmation proprement dite commence.

L'utilisateur voit le voyant lumineux 7 allumé de manière fixe iniquant qu'il peut appuyer sur le bouton-poussoir 8.

Cette manœuvre étant réalisée, l'afficheur 1 et le voyant lumineux 9 clignotent pour indiquer à l'utilisateur qu'il peut maintenant tourner le générateur d'impulsions 10 pour sélectionner, sur l'afficheur 1, la séquence de son choix. Dès que la séquence est choisie, l'utilisateur lâche le bouton-poussoir 8 et le voyant de l'afficheur correspondant à cette séquence est allumé de manière fixe, ou bien encore la séquence est indiquée en clair à l'aide des caractères alphanumériques constituant l'afficheur.

Pour la programmation suivante, le voyant lumineux 7 clignote et le voyant 11 de programmation de la température clignote également pour indiquer à l'utilisateur qu'il doit maintenant régler la température de l'appareil. L'utilisateur appuie alors sur le bouton-poussoir 8. Suite à cette manœuvre, le voyant lumineux 9 clignote et indique à l'utilisateur qu'il doit tourner le générateur d'impulsions 10 pour afficher, sur l'afficheur numérique 2, la température de son choix. Dès que la température est choisie, l'utilisateur lâche le bouton-poussoir 8 et le voyant lumineux 11 est allumé de manière fixe.

Pour la programmation suivante, les voyants lumineux 5 et 7 clignotent et le voyant lumineux 12 clignote également pour indiquer à l'utilisateur qu'il peut maintenant régler la durée de la cuisson. Mais à cet instant de la programmation, l'utilisateur a le choix entre un fonctionnement manuel ou un fonctionnement automatique, et il dispose maintenant de quelques secondes pour prendre une décision.

S'il désire que l'appareil reste en fonctionnement manuel, l'utilisateur ne fait aucune manœuvre et après ces quelques secondes, les voyants lumineux 5 et 7 sont allumés de manière fixe, le voyant lumineux est éteint et l'appareil de cuisson fonctionne manuellement, avec seulement la température choisie.

S'il désire que l'appareil passe en fonctionnement automatique, l'utilisateur appuie immédiatement sur le bouton 8.

Suite à cette opération, le voyant lumineux 5 s'éteint, le voyant lumineux 6 clignote et le voyant lumineux 9 clignote également pour indiquer à l'utilisateur qu'il peut tourner le générateur d'impulsions 10 pour afficher sur l'afficheur numérique 2 la durée de la cuisson.

Dès que la durée est affichée, l'utilisateur lâche le bouton-poussoir 8 et les voyants lumineux 6, 11 et 12 sont allumés de manière fixe.

Pour la programmation suivante, le voyant lumineux 7 clignote et le voyant lumineux 13 clignote également pour indiquer à l'utilisateur qu'il peut maintenant régler l'heure de fin de cuisson. Mais à cet instant de la programmation, l'utilisateur a le choix entre débuter la cuisson immédiatement ou différer celle-ci, et il dispose de quelques secondes pour prendre une décision.

S'il désire débuter la cuisson immédiatement, l'utilisateur ne fait aucune manœuvre et après ces quelques secondes, les voyants lumineux 6, 7, 11, 12 sont allumés de manière fixe et l'appareil fonctionne à la température choisie et pour la durée choisie.

S'il désire différer la cuisson, l'utilisateur appuie immédiatement sur le bouton 8. Suite à cette opération, le voyant lumineux 13 clignote et le voyant lumineux 9 clignote également pour indiquer à l'utilisateur qu'il peut tourner le générateur d'impulsions 10 pour afficher, sur l'afficheur numérique 2, l'heure de fin de cuisson.

Dès que l'heure de fin de cuisson est choisie, l'utilisateur lâche le bouton-poussoir 8 et les voyants lumineux 6, 7, 11, 12, 13 sont allumés de manière fixe. La cuisson débutera à l'instant choisi, pour la durée choisie et à la température chosie.

L'utilisateur ne manœuvre donc que deux moyens de commande qui permettent de programmer partiellement ou entièrement l'appareil.

L'utilisateur conserve à tout instant la possibilité de relire les informations programmées, dans l'ordre de programmation, en appuyant sur le bouton-poussoir 8 autant de fois qu'il est nécessaire. Il conserve également la possibilité de modifier la programmation.

**Revendications**

1. Appareil de cuisson à commande interactive, comportant un microprocesseur interactif (30), des moyens de commande sous la forme d'un générateur d'impulsions (10) et d'un bouton-poussoir (8) mis à la disposition d'un utilisateur pour programmer une séquence de fonctionnement, et des dispositifs d'affichage comportant un afficheur numérique (2), caractérisé en ce que les dispositifs d'affichage comprennent en outre un afficheur de séquences (1) indiquant la nature de la séquence de fonctionnement, et des voyants associés (11, 12, 13) à l'afficheur numérique (2) indiquant chacun la nature des informations inscrites sur ledit afficheur numérique (2), et en ce que lors de la programmation d'une séquence apparaissent exclusivement des informations nécessaires au déroulement de la séquence considérée.

2. Appareil de cuisson selon la revendication 1, caractérisé en ce que l'afficheur de séquences (1) est constitué de voyants, un pour chaque séquence, chaque voyant étant associé à un repère et/ou à un signe distinctif permettant de reconnaître la séquence correspondante.

3. Appareil de cuisson selon la revendication 1, caractérisé en ce que l'afficheur de séquences (1) est constitué de pavés numériques pour indiquer en clair les séquences de fonctionnement.

4. Appareil de cuisson selon la revendication 1, caractérisé en ce que les moyens de commande (8, 10) comportent chacun un voyant lumineux associé (7, 9) qui indique à l'utilisateur qu'il peut utiliser le moyen de commande correspondant.

5. Appareil de cuisson selon au moins l'une des revendications 1 à 4, caractérisé en ce qu'il comporte deux voyants lumineux (5, 6) permettant de connaître le mode de fonctionnement manuel ou automatique.

6. Appareil de cuisson selon au moins l'une des revendications 1 à 5, caractérisé en ce que le bouton-poussoir (8) permet, à lui seul, le contrôle de l'état de fonctionnement de l'appareil.

7. Appareil de cuisson selon au moins l'une des revendications 1 à 6, caractérisé en ce que les moyens de commande et les dispositifs d'affichage sont regroupés sur un bandeau (80).

8. Appareil de cuisson selon la revendication 7, caractérisé en ce que le bandeau (80) est sur la face frontale.

9. Appareil de cuisson selon la revendication 8, caractérisé en ce que le bandeau (80) est au sommet de la face frontale.

**Patentansprüche**

1. Garungsgerät mit interaktiver Steuerung, mit einem interaktiven Mikroprozessor (30), Steuermitteln in Form eines Impulsgenerators (10) und eines Drucktasters (8), der einem Benutzer zur Verfügung steht, um eine Betriebssequenz zu programmieren, und Anzeigevorrichtungen, die eine Zahlen-Anzeige (2) umfassen, dadurch gekennzeichnet, dass die Anzeigevorrichtungen ferner einen Sequenzen-Anzeiger (1) umfassen, welcher die Art der Betriebssequenz anzeigt, sowie der Zahlen-Anzeige (2) zugeordnete Anzeigeelemente (11, 12, 13) umfassen, die jeweils die Art der Informationen anzeigen, welche in der Zahlen-Anzeige (2) eingeschrieben sind, und dass bei der Programmierung einer Sequenz ausschliesslich die Informationen in Erscheinung treten, welche für die Abwicklung der betreffenden Sequenz erforderlich sind.

2. Garungsgerät nach Anspruch 1, dadurch gekennzeichnet, dass die Folgen-Anzeige (1) aus Anzeigeelementen gebildet ist, eine für jede Sequenz, wobei jedem Anzeigeelement eine Markierung und/oder ein Unterscheidungszeichen zugeordnet ist, durch welches die entsprechende Sequenz erkannt werden kann.

3. Garungsgerät nach Anspruch 1, dadurch gekennzeichnet, dass die Folgen-Anzeige (1) aus Zahlenblöcken gebildet ist, um die Betriebssequenzen in Klarschrift anzuzeigen.

4. Garungsgerät nach Anspruch 1, dadurch gekennzeichnet, dass die Steuermittel (8, 10) jeweils eine zugeordnete Signallampe (7, 9) umfassen, die dem Benutzer anzeigt, dass er das entsprechende Steuermittel benutzen kann.

5. Garungsgerät nach wenigstens einem der Ansprüche 1 bis 4, dadurch gekennzeichnet, dass es zwei Signallampen (5, 6) enthält, die es gestatten, die Betriebsart – manuell oder automatisch – zu erkennen.

6. Garungsgerät nach wenigstens einem der Ansprüche 1 bis 5, dadurch gekennzeichnet, dass der Drucktaster (8) allein die Steuerung des Betriebszustands des Gerätes ermöglicht.

7. Garungsgerät nach wenigstens einem der Ansprüche 1 bis 6, dadurch gekennzeichnet, dass die Steuermittel und die Anzeigevorrichtungen in einem Streifen (80) gruppiert sind.

8. Garungsgerät nach Anspruch 7, dadurch gekennzeichnet, dass der Streifen (80) sich auf der Stirnseite befindet.

9. Garungsgerät nach Anspruch 8, dadurch gekennzeichnet, dass der Streifen (80) sich an der Oberseite der Stirnfläche befindet.

**Claims**

1. Cooking apparatus with interactive control, comprising an interactive microprocessor (30), control means provided as a pulse generator (10) and a push button (8) which are available to a user to program an operating sequence, and display devices comprising a numerical display (2), characterized in that the display devices further comprise a sequence display (1) indicating the nature of the operating sequence, and optical indicators (11, 12, 13) associated with the numerical display (2) each indicating the nature of the information appearing on the numerical display (2), and in that, upon programming of a sequence, exclusively that information appears which is required for the running of the considered sequence.

2. Cooking apparatus according to claim 1, characterized in that the sequence display (1) is formed of optical indicators, one for each sequence, each indicator being associated with a mark and/or with a distinctive sign permitting to recognize the corresponding sequence.

3. Cooking apparatus according to claim 1, characterized in that the sequence display (1) is formed of numerical display blocks to indicate in clear the operating sequences.

4. Cooking apparatus according to claim 1, characterized in that the control means (8, 10) each comprise an associated indicator lamp (7, 9) indicating to the user that he may use the corresponding control means.

5. Cooking apparatus according to at least one of claims 1 to 4, characterized in that it comprises two indicator lamps (5, 6) permitting to recognize the operating mode, manual or automatic.

6. Cooking apparatus according to at least one of claims 1 to 5, characterized in that the push button (8) alone permits to monitor the operating state of the apparatus.

7. Cooking apparatus according to at least one of claims 1 to 6, characterized in that the control means and the display devices are grouped on a band (80).

8. Cooking apparatus according to claim 7, characterized in that the band (80) is located on the front face.

9. Cooking apparatus according to claim 8, characterized in that the band (80) is located at the top of the front face.

FIG.1

1
80
2
3
4
06:38
5
6
7
8
9
10
11
12
13
14

FIG.2
41
51
61
71
10
45
75
40
50
60
70
55
65
18
4
31
3
8
42
52
62
72
19
32
30
20
21
22
22
22
1
06:38
2
5
7
11
13
6
9
14
12
22